# EUROPEAN PATENT APPLICATION

(11) **EP 4 793 946 A1**
(43) Date of publication of application: **19.08.2026**
(21) Application number: 25762364.5
(22) Date of filing: 26.02.2025
(51) Int. Cl.: G10L 21/0308, G10L 15/25, G10L 25/78

(54) **METHOD FOR SEPARATING SOUND SOURCE FROM AUDIO SIGNAL, AND ELECTRONIC DEVICE FOR PERFORMING SAME**

(30) Priority: 26.02.2024 KR 20240027505; 26.04.2024 KR 20240056307; 21.01.2025 KR 20250008847
(71) Applicant: Samsung Electronics Co., Ltd., Suwon-si, Gyeonggi-do 16677 (KR)
(72) Inventor: EOM, Deokjun, Suwon-si, Gyeonggi-do 16677 (KR); KIM, Nahyun, Suwon-si, Gyeonggi-do 16677 (KR); PARK, Jungwon, Suwon-si, Gyeonggi-do 16677 (KR); RHEE, Junyoung, Suwon-si, Gyeonggi-do 16677 (KR); KWON, Yongmin, Suwon-si, Gyeonggi-do 16677 (KR); KIM, Kyungrae, Suwon-si, Gyeonggi-do 16677 (KR); NAM, Woohyun, Suwon-si, Gyeonggi-do 16677 (KR)
(74) Representative: Appleyard Lees IP LLP
(86) International application number: PCT/KR2025/002663
(87) International publication number: WO 2025/183447

(57) **Abstract**

A method of separating a sound source from an audio signal includes obtaining an audio signal including a sound generated by a plurality of sound sources, based on a single sound source segment including only a sound generated by one sound source from among the plurality of sound sources, obtaining an embedding corresponding to at least one primary sound source from among the plurality of sound sources, and separating the at least one primary sound source from the audio signal based on the obtained embedding.

## Description

### TECHNICAL FIELD

The disclosure relates to a method of separating sound sources from an audio signal including sound generated by a plurality of sound sources, and more particularly, to a method of quickly extracting features of a primary sound source when an audio signal is given, and performing 'diarization' on the primary sound source based on the extracted features.

### BACKGROUND ART

Technologies for separating a plurality of sound sources from an audio signal are used in various fields such as speech recognition, noise removal, and music analysis. Those technologies require a previous input of features of a certain sound source (e.g., timbre and a frequency pattern) to separate a sound of the corresponding sound source. However, those technologies are not capable of clearly identifying a correspondence between a sound source and the separated sound.

These constraints hinder the accuracy and efficiency of source separation, limiting applicability in a complex audio environment. Therefore, there is a need for development of a technology for separating a plurality of sound sources from an audio signal without prior information and clearly identifying the correspondence between the sound source and the separated sound.

### DISCLOSURE OF INVENTION

### SOLUTION TO PROBLEM

According to an aspect of the disclosure, a method of separating a sound source from an audio signal may include obtaining an audio signal including a sound generated by a plurality of sound sources, based on a single sound source segment including only a sound generated by one sound source from among the plurality of sound sources, obtaining an embedding corresponding to at least one primary sound source from among the plurality of sound sources, and separating the at least one primary sound source from the audio signal based on the obtained embedding.

According to aspect embodiment of the disclosure, an electronic device may include memory storing a program or at least one instruction, and at least one processor operatively coupled to the memory, wherein the at least one processor executes the program or the at least one instruction stored in the memory to cause the electronic device to obtain an audio signal including a sound generated by a plurality of sound sources, based on a single sound source segment including only a sound generated by one sound source from among the plurality of sound sources, obtain an embedding corresponding to at least one primary sound source from among the plurality of sound sources, and then separate the at least one primary sound source from the audio signal based on the obtained embedding.

According to an aspect of the disclosure, a computer-readable recording medium may have stored therein a program for executing at least one of the method according to embodiments of the disclosure on a computer.

According to an aspect of the disclosure, a computer program may be stored in a medium for executing the method according to embodiments of the disclosure.

### BRIEF DESCRIPTION OF DRAWINGS

The above and other aspects, features, and advantages of certain embodiments of the disclosure will be more apparent from the following description taken in conjunction with the accompanying drawings, in which:
FIG. 1 illustrates modules provided in an electronic device for performing a sound source separation process according to an embodiment of the disclosure;
FIG. 2 illustrates detailed components provided in a fast scanning module according to an embodiment of the disclosure;
FIG. 3 illustrates a process in which a fast scanning module performs fast scanning on an audio signal according to an embodiment of the disclosure;
FIG. 4 illustrates detailed components in a sound source separation module according to an embodiment of the disclosure;
FIG. 5 illustrates a process in which a sound source separation module separates a sound source from an audio signal based on a fast scanning result, according to an embodiment of the disclosure;
FIG. 6 illustrates a method of concatenating a sound of a target sound source with an audio signal so as to improve sound source separation accuracy according to an embodiment of the disclosure;.
FIG. 7 illustrates a method of summing an audio signal and a sound of a target sound source so as to improve sound source separation accuracy according to an embodiment of the disclosure;
FIG. 8 illustrates modules provided in an electronic device for performing a sound source separation process according to an embodiment of the disclosure;
FIG. 9 illustrates a process of matching a person in a video to a sound source separated from an audio signal by an electronic device according to an embodiment of the disclosure;
FIG. 10 illustrates user interface (UI) screens indicating sound source separation results displayed on a screen of an electronic device according to an embodiment of the disclosure;
FIG. 11 illustrates components provided in an electronic device according to an embodiment of the disclosure; and
FIGS. 12 to 18 illustrate a method of generating a digital zoom image by using generative artificial intelligence (AI) according to embodiments of the disclosure.

### MODE FOR THE INVENTION

With regard to the description of the disclosure, technical features that are not directly related to the disclosure may be not described here. Certain detailed explanations of related art are omitted for clarity when it is deemed that they may unnecessarily obscure the essence of the disclosure. The terms used in the specification are defined in consideration of functions used in the disclosure, and may be changed according to the intent or conventionally used methods of clients, operators, and users. Accordingly, definitions of the terms should be understood on the basis of the entire description of the present specification.

In the same reason, some components in the following drawings may be exaggerated, omitted, or schematically illustrated. The sizes of components do not reflect their actual sizes completely. The same reference number is given to the same or corresponding components in each drawing.

Advantages and features of the disclosure, and methods of achieving them may be clear with reference to the detailed description of the following embodiments taken in conjunction with the accompanying drawings. However, the disclosure may be not limited to the embodiments disclosed below, but may be implemented in various different forms. These embodiments are intended to complete the disclosure, and are common in the art to which the disclosure belongs, and it may be provided to fully inform the person skilled in the art of the scope of the disclosure. An embodiment of the disclosure is defined by the scope of the claims. Like reference numerals refer to like elements throughout the specification. In the following description of an embodiment of the disclosure, a detailed description of functions and configurations incorporated herein will be omitted when it may make the subject matter of the disclosure unclear. The following terms used in the specification are defined in consideration of functions used in the disclosure, and may be changed according to the intent or conventionally used methods of operators and users. Accordingly, definitions of the terms should be understood on the basis of the entire description of the present specification.

According to an embodiment of the disclosure, combinations of each block of flowcharts and the flowcharts may be performed by computer program instructions. Computer program instructions may be installed on a processor of a general computer, a special computer or other programmable data processing equipment, and the instructions executed through the processor of the computer or other programmable data processing equipment may generate an element for performing functions described in block(s) of flowcharts. Computer program instructions may be stored in computer available or computer readable memory that may aim for a computer or other data processing equipment to implement functions in a certain way, and instructions stored in the computer available or computer readable memory may also produce manufacturing items that contain instruction elements for performing the functions described in the block(s) of the flowcharts. It is also possible that computer program instructions are installed on a computer or other programmable data processing equipment.

Each block of flowcharts may indicate a part of a module, segment or code including one or more executable instruments for executing a certain logical function(s). According to an embodiment of the disclosure, it is also possible that functions mentioned in the blocks are performed out of order. For example, two blocks that are consecutively shown may actually be performed at the same time, or in reverse order depending on the function.

The term "unit" or the term "module" in an embodiment of the disclosure may be or correspond to a software component or a hardware component, such as a field programmable gate array (FPGA) or an application specific integrated circuit (ASIC), that performs a certain function. However, the term "unit" or the term "module" is not limited to software or hardware. The "unit" or the "module" may be formed to be stored in an addressable storage medium, or may be formed to operate one or more processors to reproduce the same. In an embodiment of the disclosure, the term "unit" or the "module" may be or correspond to components such as software components, object-oriented software components, class components, and task components, processes, functions, attributes, procedures, subroutines, segments of program code, drivers, firmware, micro code, circuits, data, databases, data structures, tables, arrays, and parameters. Functions provided by certain elements and a certain "unit" or "module" may be combined in a smaller number of elements or may be separated into additional elements. In an embodiment of the disclosure, the "unit" or the "module" may include one or more processors.

Hereinafter, the meanings of terms used in the disclosure are explained.

The 'sound source' may be or correspond to a source that generates a sound. For example, the sound source may correspond to a physical entity such as a speaker, a musical instrument, an animal, a machine, or an environment. In the disclosure, the 'sound source' is not limited to a physical source, and may also be considered as an analysis unit for distinguishing a certain sound in signal processing.

The 'sound' may be or correspond to a physical wave that is generated from a sound source and transmitted through a medium (air, water, or the like). The sound may be expressed as a speech of a speaker, a musical instrument sound, an animal sound, background noise, or the like, and in the disclosure, may be or correspond to sound data expressed as an audio signal. The sound is a result of a sound source and may be subject to separation, analysis, or conversion in a signal processing process.

The 'audio signal' may be or correspond to data obtained by converting sound generated by a sound source into an electrical signal. In the disclosure, the audio signal may include sound generated from a plurality of sound sources.

The 'sound source separation' may be or correspond to an operation of extracting or separating a sound corresponding to a separate sound source from a mixed audio signal. For example, a technology for separating a voice of each speaker from an audio signal containing a conversation between multiple speakers or extracting a sound of a certain musical instrument sound from a music recording may correspond to sound source separation. Instead of the 'sound source separation', terms such as 'source separation', 'sound source extraction', 'speech separation' or 'speaker separation' may be used.

The 'embedding' may be or correspond to a vector that expresses features of a sound source, sound, or audio signal. For example, an audio signal of a certain sound may be converted into a vector containing the features of the corresponding sound, and this converted vector may correspond to an embedding. Therefore, an 'embedding' corresponding to a certain sound source may include the features of the corresponding sound source (e.g., timbre, a speech pattern, or a frequency pattern). Instead of the 'embedding', a term such as 'feature vector' may be used.

The 'fast scanning' may be or correspond to an operation of selecting a primary sound source from an audio signal containing a mixture of a plurality of sound sources and obtaining an embedding corresponding to the primary sound source. In other words, the fast scanning may be or correspond to an operation of finding a single sound source segment in an audio signal and extracting the features of a sound contained in the single sound source segment. For example, an electronic device may generate an embedding (i.e., a feature vector) by performing embedding conversion on the sound in the single sound source segment. The embedding generated in this way may contain information about the features of the sound source.

The 'single sound source segment' may be or correspond to a frame that contains only sound generated from one sound source from among frames obtained by segmenting an audio signal in units of certain time lengths. In other words, the single sound source segment may be or correspond to a frame in which no other sound sources exist during a corresponding time segment and only a sound of a certain sound source is activated. In the disclosure, the single sound source segment may be used to extract the features of sound sources and select a primary sound source in the fast scanning process described above. Instead of the 'single sound source segment', terms such as 'single sound source frame' or 'exclusive sound source segment' may be used.

The 'diarization' may be or correspond to an operation of identifying active segments of a sound source based on a time axis. In other words, diarization may be or correspond to an operation of segmenting an audio signal into time segments and identifying each segment to correspond to a certain sound source or speaker. For example, in an audio signal containing a conversation between multiple speakers, diarization may correspond to distinguish when each speaker spoke for each time segment. Instead of 'diarization', terms such as 'speaker diarization' or 'sound source diarization' may be used.

Embodiments of the disclosure relate to a method of separating a sound source from an audio signal including a sound generated by a plurality of sound sources, and in this case, an embedding corresponding to a primary sound source from among a plurality of sound sources may be obtained by performing fast scanning on the audio signal and the primary sound source may be separated from the audio signal by using the obtained embedding.

### 1. Overall configuration and operations for performing sound source separation process

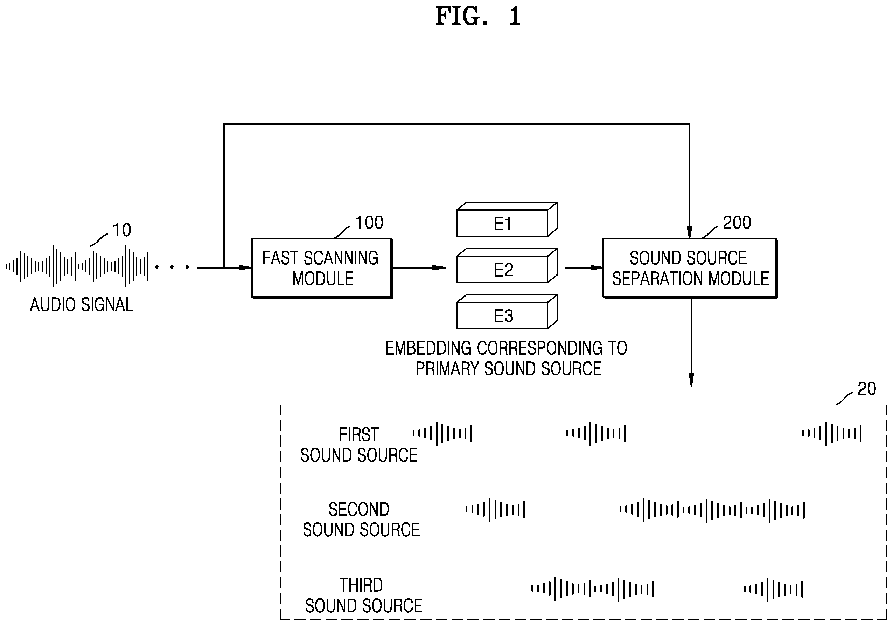

FIG. 1 illustrates modules provided in an electronic device for performing a sound source separation process according to an embodiment of the disclosure. Referring to FIG. 1, the electronic device may include a fast scanning module 100 and a sound source separation module 200.

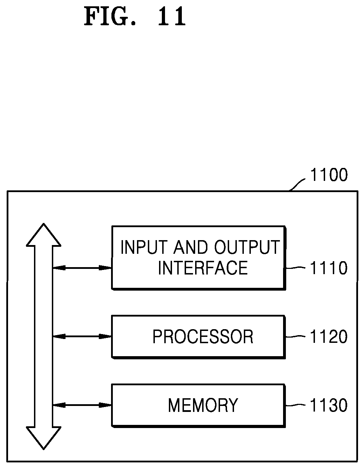

In some embodiments, the modules 100 and 200 of FIG. 1 are components classified based on a function or a role and may be software components implemented by a processor 1120 of an electronic device 1100 described below with reference to FIG. 11 executing a program or instruction stored in memory 1130. In some embodiments, the modules 100 and 200 of FIG. 1 may be virtual components in which no matching hardware device actually exists.

In other words, the operations performed by the processor 1120 of the electronic device 1100 of FIG. 11 executing the program or instruction stored in the memory 1130 may be classified into a plurality of groups by function or purpose, and subjects performing the operations provided in each classified group may be expressed as the modules 100 and 200 of FIG. 1.

Accordingly, the operations performed by the modules 100 and 200 may be seen as actually being performed by the processor 1120 of the electronic device 1100 of FIG. 11 executing the program or instruction stored in the memory 1130.

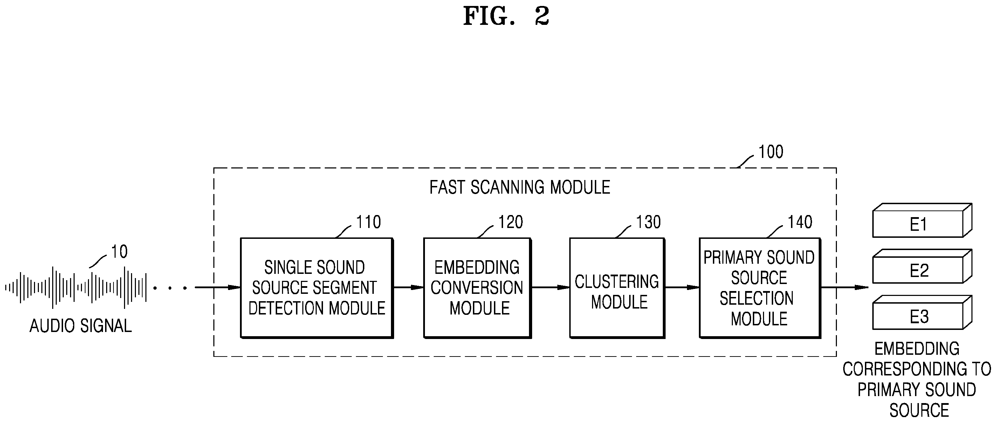

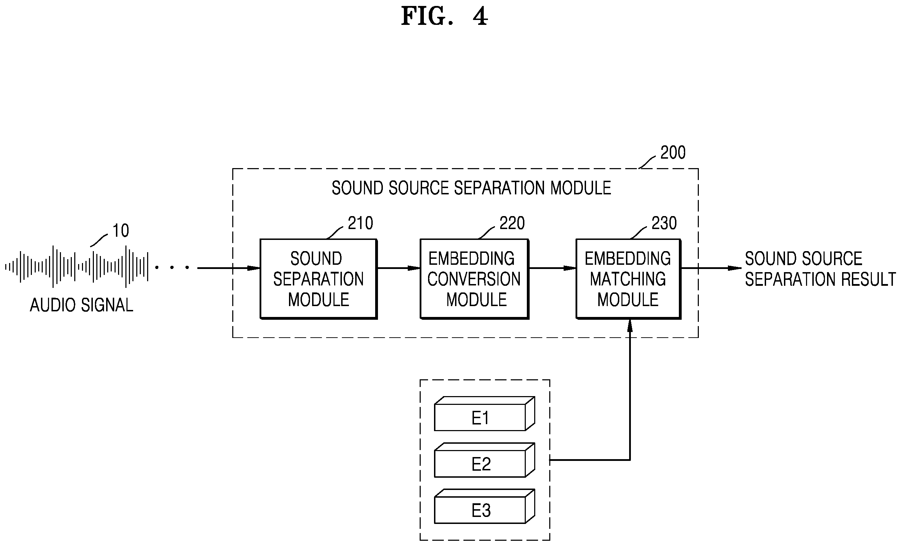

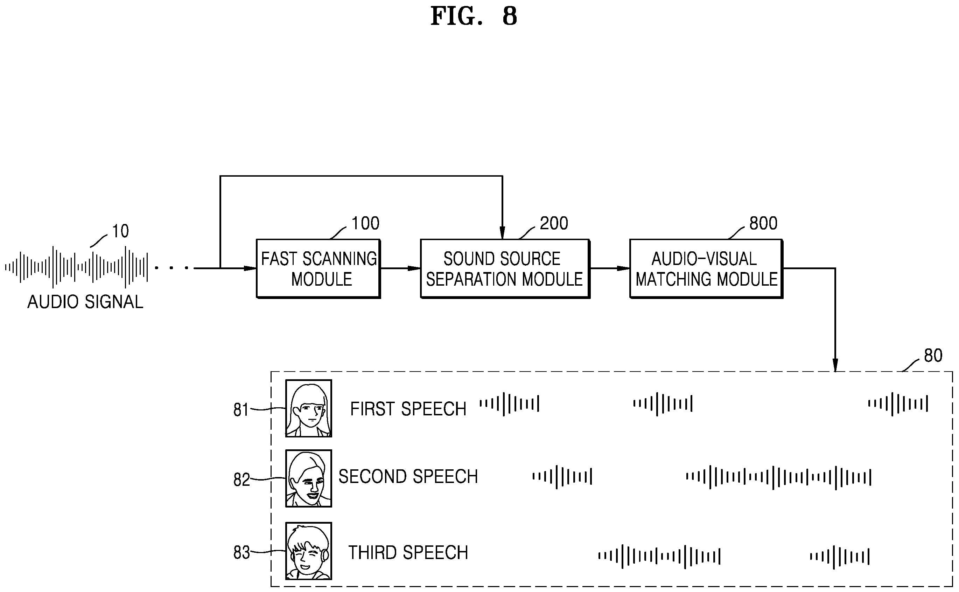

These contents may be applied to modules 110, 120, 130, and 140 illustrated in FIG. 2, modules 210, 220, and 230 illustrated in FIG. 4, and modules 100, 200, and 800 illustrated in FIG. 8.

In an embodiment, an audio signal 10 may include sound generated by a plurality of sound sources. For example, the audio signal 10 may include a speech generated by a plurality of speakers. In some embodiments, the audio signal 10 may include sounds generated by various types of sound sources, such as a speech of a speaker, a musical instrument sound, or an animal sound. An electronic device according to an embodiment of the disclosure may separate sound provided in the audio signal 10 for each sound source.

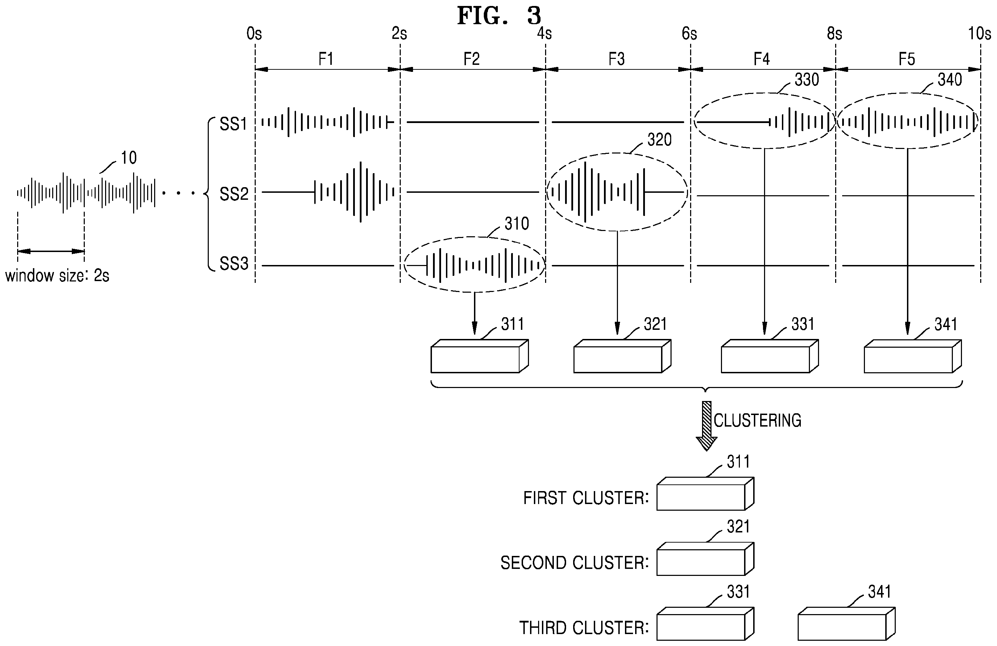

When the audio signal 10 is input to a fast scanning module 100, the fast scanning module 100 may output embeddings E1, E2, and E3 corresponding to a primary sound source. The primary sound source may be or correspond to some sound sources selected from among a plurality of sound sources based on importance or the like. A method of selecting a primary sound source, and furthermore, a detailed method of performing fast scanning are described in detail with reference to FIGS. 2 and 3 below.

A sound source separation module 200 may separate primary sound sources from the audio signal 10 based on the embeddings E1, E2, and E3 received from the fast scanning module 100. A sound source separation result 20 output from the sound source separation module 200 may include the following data.
- Information about a list of primary sound sources
- Audio signal of sound corresponding to primary sound source
- Information about segment in which sound corresponding to primary sound source is activated

### 2. Detailed configurations and operations of fast scanning module

An electronic device according to an embodiment of the disclosure may, when the audio signal 10 is given, select a primary sound source from among a plurality of sound sources by analyzing some segments of the audio signal 10 and obtain an embedding corresponding to the primary sound source. As such, an operation of selecting a primary sound source and obtaining an embedding corresponding to the primary sound source by analyzing some segments of the audio signal 10 is referred to as 'fast scanning' in the disclosure. A process for performing fast scanning by an electronic device according to an embodiment of the disclosure may summarized as follows:
- Detect single sound source segment from audio signal
- Convert sound provided in single sound source segment into embedding
- Classify embeddings for each sound source by performing clustering
- Determine some of a plurality of sound sources as primary sound source

An electronic device according to an embodiment of the disclosure may automatically and quickly obtain information about sound sources through fast scanning.

Previously, to separate a certain sound source from an audio signal, information about the corresponding sound source needs to be provided separately. However, an electronic device according to an embodiment of the disclosure may perform sound source separation based on information about a sound source obtained through fast scanning (e.g., an embedding of primary sound source) even when information about a sound source to be separated is not provided.

Hereinafter, a process in which an electronic device according to an embodiment of the disclosure performs fast scanning on the audio signal 10 will be described in detail with reference to FIGS. 2 and 3.

FIG. 2 illustrates detailed components provided in a fast scanning module according to an embodiment of the disclosure. FIG. 3 illustrates a process in which a fast scanning module performs fast scanning on an audio signal according to an embodiment of the disclosure.

Referring to FIG. 2, as a non-limiting example, the fast scanning module 100 may include a single sound source segment detection module 110, an embedding conversion module 120, a clustering module 130, and a primary sound source selection module 140. The operations of each module is explained with reference to FIG. 3.

### (1) Extracting embedding from single sound source segment

The single sound source segment detection module 110 may detect a single sound source segment from the audio signal 10. As defined above, the single sound source segment may be or correspond to a segment (e.g., a frame) that contains only sound generated from one sound source.

According to an embodiment of the disclosure, the electronic device may segment the audio signal 10 into a plurality of frames and process the frames. In FIG. 3, a length of each frame (i.e., a window size) is set to two (2) seconds. In some other embodiments, the length of the frame may be set in various ways depending on given conditions or needs. A stride, which indicates a degree to which consecutive frames overlap each other, may be set to various lengths (e.g., one (1) second).

In FIG. 3, the single sound source segment detection module 110 performs fast scanning for first 10 seconds of the audio signal 10. A segment in which fast scanning is performed is segmented into a first frame F1 to a fifth frame F5 in units of 2 seconds. In FIG. 3, sound provided in the audio signal 10 is separated for each sound source with respect to the segment in which fast scanning is performed.

The single sound source segment detection module 110 may detect whether sound sources are activated for each of the frames F1, F2, F3, F4, and F5, thereby detecting, as a single sound source segment, frames in which only sound generated by one sound source is activated. Only a third sound source SS3 may be activated in the second frame F2, and thus, the single sound source segment detection module 110 may detect the second frame F2 as a single sound source segment. Similarly, only a second sound source SS2 is activated in the third frame F3, and only a first sound source SS1 is activated in the fourth frame F4 and the fifth frame F5, and thus, the single sound source segment detection module 110 may detect, as a single sound source segment, all of the third frame F3, the fourth frame F4, and the fifth frame F5.

When detecting the single sound source segments, the embedding conversion module 120 may obtain an embedding that includes the features of the sound activated in each single sound source segment. In other words, the embedding conversion module 120 may generate a vector (i.e., an embedding) that includes the features of a sound source that generates the sound provided in the single sound source segment. For example, the embedding conversion module 120 may generate a feature vector (i.e., an embedding) by converting an audio signal of the sound provided in the single sound source segment into a time-frequency domain and then performing embedding conversion through a neural network-based model.

Referring to FIG. 3, the embedding conversion module 120 may generate a first embedding 311 by performing embedding conversion on sound 310 of the third sound source SS3 activated in the second frame F2. Similarly, the embedding conversion module 120 may extract a second embedding 321, a third embedding 331, and a fourth embedding 341 from sound 320 provided in the third frame F3, sound 330 provided in the fourth frame F4, and a sound 340 provided in the fifth frame F5, respectively.

The embeddings 311, 321, 331, and 341 extracted from the single sound source segments F2, F3, F4, and F5 in this way may include the acoustic features of the sound source that generates the sound provided in each segment, and thus, may be used to distinguish the sound source.

### (2) Embedding clustering and primary sound source determination

The clustering module 130 may perform clustering on the embeddings 311, 321, 331, and 341 extracted from the single sound source segments F2, F3, F4, and F5, and thus, may classify the embeddings 311, 321, 331, and 341 into a plurality of clusters and determine an embedding corresponding to each sound source.

For example, the clustering module 130 may compare all of the extracted embeddings 311, 321, 331, and 341 with each other and classify embeddings with a similarity greater than or equal to a certain reference into the same cluster. In FIG. 3, as a result of clustering performed by the clustering module 130, the first embedding 311 is classified into a first cluster, the second embedding 321 is classified into a second cluster, and the third embedding 331 and the fourth embedding 341 are classified into a third cluster.

The clustering module 130 may assign one sound source to each classified cluster. Accordingly, a corresponding embedding for each sound source may be determined. In FIG. 3, the third sound source SS3 is assigned to the first cluster, the second sound source SS2 is assigned to the second cluster, and the first sound source SS1 is assigned to the third cluster. Accordingly, the first embedding 311 corresponds to the third sound source SS3, the second embedding 321 corresponds to the second sound source SS2, and the third embedding 331 and the fourth embedding 341 correspond to the first sound source SS1. The embedding corresponding to each sound source may be used later in a sound source separation process.

The primary sound source selection module 140 may select one or more sound sources from among a plurality of sound sources that generate sound provided in the audio signal 10 as primary sound sources. According to an embodiment of the disclosure, the primary sound source selection module 140 may determine the primary sound source based on the length of sound generated by each sound source within a segment in which fast scanning is performed. In an embodiment, the primary sound source selection module 140 may identify an active segment for each sound source based on the clustering result and determine at least one sound source from among a plurality of sound sources as the primary sound source based on the length of the active segment. For example, the primary sound source selection module 140 may determine, as primary sound sources, a preset number of sound sources in order of increasing length of the active segment.

As seen from FIG. 3, comparing the lengths of the active segments of respective sound sources, the active segment of the first sound source SS1 is the longest and the active segment of the second sound source SS2 is the shortest. The primary sound source selection module 140 may select the first sound source SS1 as a primary sound source when one sound source needs to be selected as a primary sound source and may select the first sound source SS1 and the third sound source SS3 as primary sound sources when two sound sources need to be selected as primary sound sources. In some embodiments of the disclosure, the first sound source SS1, the second sound source SS2, and the third sound source SS3 are all selected as primary sound sources. As illustrated in FIG. 2, the fast scanning module 100 may output the embedding E1 corresponding to the first sound source SS1, the embedding E2 corresponding to the second sound source SS2, and the embedding E3 corresponding to the third sound source SS3.

Referring to FIGS. 2 and 3, either the third embedding 331 extracted from the fourth frame F4 or the fourth embedding 341 extracted from the fifth frame F5 may be used as the embedding E1 corresponding to the first sound source SS1. Similarly, the second embedding 321 extracted from the third frame F3 may be used as the embedding E2 corresponding to the second sound source SS2. The first embedding 311 extracted from the second frame F2 may be used as the embedding E3 corresponding to the third sound source SS3.

In some embodiments, a primary sound source is selected based on the length of the active segment. In some embodiments, the primary sound source selection module 140 may select the primary sound source based on various other references.

### 3. Detailed configurations and operations of sound source separation module

Referring back to FIG. 1, the sound source separation module 200 may separate primary sound sources from the audio signal 10 based on the embeddings E1, E2, and E3 corresponding to the primary sound sources. According to an embodiment of the disclosure, the sound source separation module 200 may select some or all of the primary sound sources as target sound sources and separate the target sound sources from the audio signal 10.

A method of selecting some or all of the primary sound sources detected as a result of fast scanning as target sound sources will be described below.

According to an embodiment of the disclosure, an electronic device may select target sound sources in order of increasing length of active segments. For example, when the sound source is a speaker, the electronic device may select a certain number of speakers in order of the number of utterances as target sound sources (target speakers).

According to an embodiment of the disclosure, a user may select at least one of the primary sound sources as a target sound source. For example, when a list of primary sound sources detected as a result of performing fast scanning is displayed on a screen of the electronic device, the user may select a target sound source from the displayed list.

In this case, the electronic device may also display a screen to allow the user to identify the primary sound source. For example, the electronic device may display a screen that allows a user to identify a single sound source segment (a segment in which the primary sound source is activated alone) corresponding to each primary sound source on a time axis. In some embodiments, the electronic device may allow a user to hear sound generated by each sound source with respect to primary sound sources. In some embodiments, the electronic device may display a screen that allows the user to view a video corresponding to a single sound source segment corresponding to the primary sound source.

The sound source separation module 200 may separate, from the audio signal 10, the target sound source selected by using the method described above.

### (1) Process of separating target sound source

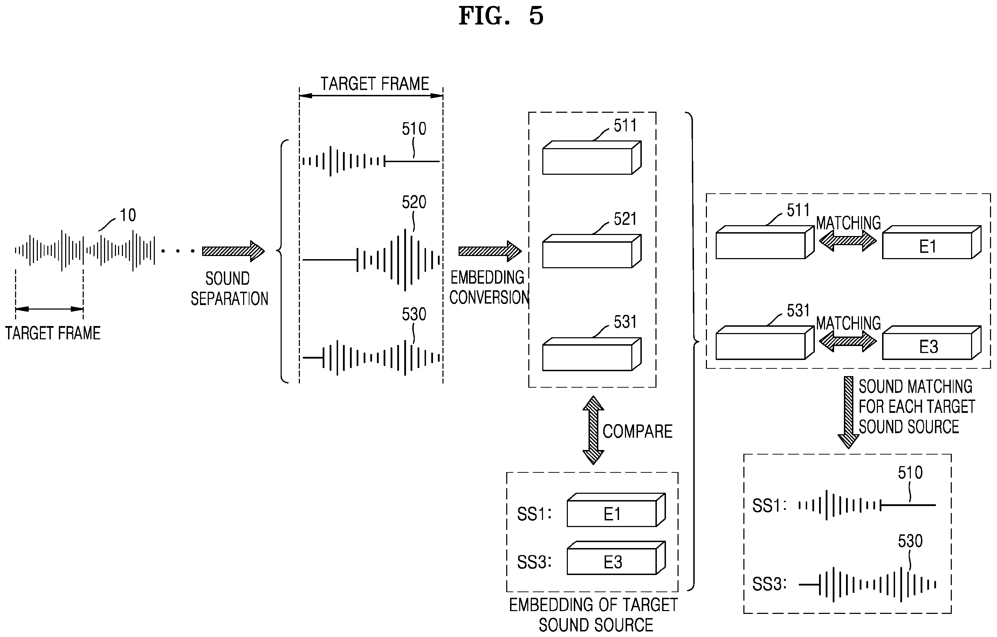

FIG. 4 illustrates detailed components provided in a sound source separation module according to an embodiment of the disclosure. FIG. 5 illustrates a process in which a sound source separation module separates a sound source from an audio signal based on a fast scanning result, according to an embodiment of the disclosure.

Referring to FIG. 4, the sound source separation module 200 may include a sound separation module 210, an embedding conversion module 220, and an embedding matching module 230. The operation of each module is explained with reference to FIG. 5.

The sound separation module 210 may separate sound provided in the audio signal 10. As described above, the audio signal 10 may be processed for each frame, and thus, the sound separation module 210 may separate a sound for each frame.

When a target frame segmented from the audio signal 10 is input to the sound separation module 210, the sound separation module 210 may separate sounds 510, 520, and 530 provided in the target frame. Referring to FIG. 5, the sound separation module 210 separates a first sound 510, a second sound 520, and a third sound 530 from the target frame.

The embedding conversion module 220 may generate a vector (embedding) including the features of the separated sound by performing embedding conversion on the sound separated from the audio signal 10. In FIG. 5, the embedding conversion module 220 may convert the first sound 510, the second sound 520, and the third sound 530 into a first embedding 511, a second embedding 521, and a third embedding 531, respectively. The embedding corresponding to each sound may include the features of the sound source that generates the corresponding sound.

When the embedding conversion is completed, the embedding matching module 230 may compare the embeddings 511, 521, and 531 converted from the separated sounds 510, 520, and 530 with the embeddings of the primary sound source (or target sound source) to determine whether the compared embeddings are matched and may separate the sound source based on the matching result.

As explained above, some of the primary sound sources may be selected as target sound sources. In FIG. 5, the first sound source SS1 and the third sound source SS3 are selected as target sound sources. Accordingly, the embedding matching module 230 may compare each of the first embedding 511 to the third embedding 531 with the embedding E1 of the first sound source SS1 and the embedding E3 of the third sound source SS3 to determine whether each of the first embedding 511 to the third embedding 531 match the embedding E1 of the first sound source SS1 and the embedding E3 of the third sound source SS3. The embedding matching module 230 may determine that two embeddings are matched when a similarity between those two embeddings is greater than or equal to a certain reference.

Referring to FIG. 5, the embedding matching module 230 may determine that the first embedding 511 matches the embedding E1 of the first sound source SS1 and that the third embedding 531 matches the embedding E3 of the third sound source SS3. Accordingly, the first sound 510 corresponds to the first sound source SS1, and the third sound 530 corresponds to the third sound source SS3.

The embedding matching module 230 may perform diarization on target sound sources based on the matching result. For example, the embedding matching module 230 may display an active segment of sound generated by a target sound source on a time axis by matching the sound corresponding to the target sound source to all frames constituting the audio signal 10.

### (2) Methods for improving separation accuracy (concatenation or summation of sound generated by target sound source)

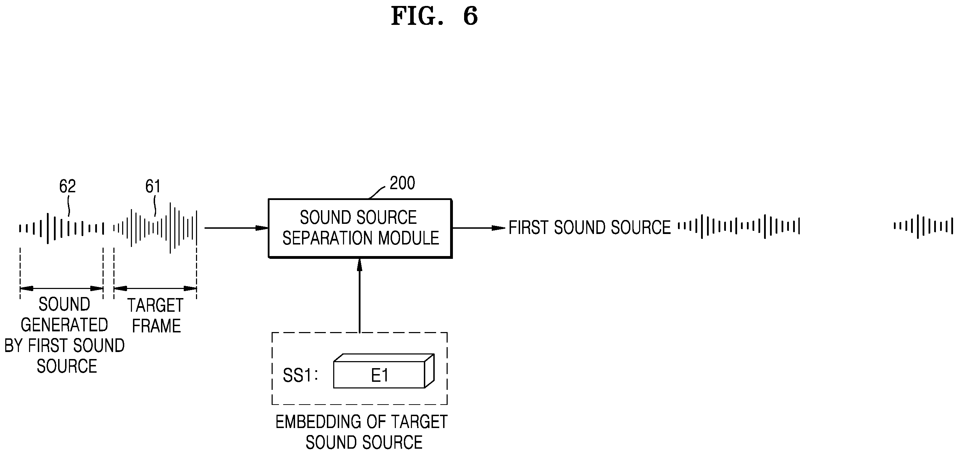

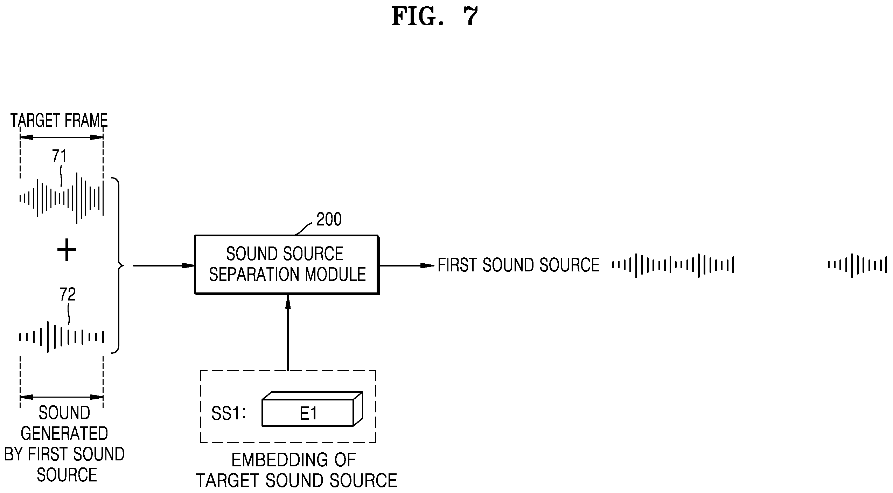

As described above, the sound source separation module 200 may separate a target sound source from an audio signal based on an embedding of the target sound source, and according to embodiments of the disclosure, to increase separation accuracy, sound generated by the target sound source may be added to an input of the sound source separation module 200. Detailed embodiments of the disclosure are described with reference to FIGS. 6 and 7.

FIG. 6 illustrates a method of concatenating a sound of a target sound source with an audio signal so as to improve sound source separation accuracy according to an embodiment of the disclosure. FIG. 7 illustrates a method of summing an audio signal and a sound of a target sound source so as to improve sound source separation accuracy according to an embodiment of the disclosure.

As described above, the sound source separation module 200 according to an embodiment of the disclosure may separate the sound of the target sound source from the audio signal when receiving the audio signal and an embedding (target embedding) of the target sound source. To separate a sound source, the sound source separation module 200 may determine whether an embedding of sound provided in the audio signal matches an embedding of the target sound source. When the sound source is separated based only on the result of comparing the embeddings, the separation accuracy may decrease. Therefore, the electronic device according to an embodiment of the disclosure may additionally input an audio signal of sound generated by a target sound source to the sound source separation module 200 such that the sound generated by the target sound source may also be referenced during sound source separation.

In FIG. 6, the first sound source SS1 is selected as the target sound source, and therefore, the embedding E1 of the first sound source SS1 is input to the sound source separation module 200.

The sound 62 generated by the first sound source SS1, which is the target sound source, may be concatenated with a front of a target frame 61 segmented from the audio signal, and the concatenated signal may be input to the sound source separation module 200. The sound 62 generated by the target sound source may also be concatenated with a back of the target frame 61.

The sound source separation module 200 may accurately separate only the sound of the target sound source from the target frame 61 by also referring to an audio signal 62 of the sound generated by the first sound source SS1, which is the target sound source.

The sound generated by the target sound source used in an embodiment of the disclosure may be obtained during a process in which the electronic device performs fast scanning. That is, the audio signal of the sound provided in the single sound source segment detected during a process in which the electronic device performs fast scanning may be concatenated with a front or back of the target frame 61. The embedding E1 of the first sound source SS1, obtained during the process in which the electronic device performs fast scanning, may be input as a target embedding to the sound source separation module 200.

In FIG. 7, the first sound source SS1 is selected as the target sound source, and therefore, the embedding E1 of the first sound source SS1 is input to the sound source separation module 200.

The sound 72 generated by the first sound source SS1, which is the target sound source, may be summed in a target frame 71 segmented from the audio signal, and the summed signal may be input to the sound source separation module 200. In detail, the electronic device may sum an audio signal of the sound 72 generated by the first sound source SS1 and an audio signal of the target frame 71 in the same time segment and then input the summed audio signal to the sound source separation module 200.

The sound source separation module 200 may accurately separate only the sound of the target sound source from the target frame 71 by also referring to an audio signal 72 of the sound generated by the first sound source SS1, which is the target sound source.

The sound generated by the target sound source used in an embodiment of the disclosure may be obtained during a process in which the electronic device performs fast scanning. That is, the audio signal of the sound provided in the single sound source segment detected during a process in which the electronic device performs fast scanning may be summed into the target frame 71. The embedding E1 of the first sound source SS1, obtained during the process in which the electronic device performs fast scanning, may be input as a target embedding to the sound source separation module 200.

### 4. Methods of matching separated sound source (speaker) to person in video

When separating a speech from an audio signal provided in a video, an electronic device according to an embodiment of the disclosure may match the separated speech to a person (i.e., a speaker) contained in the video.

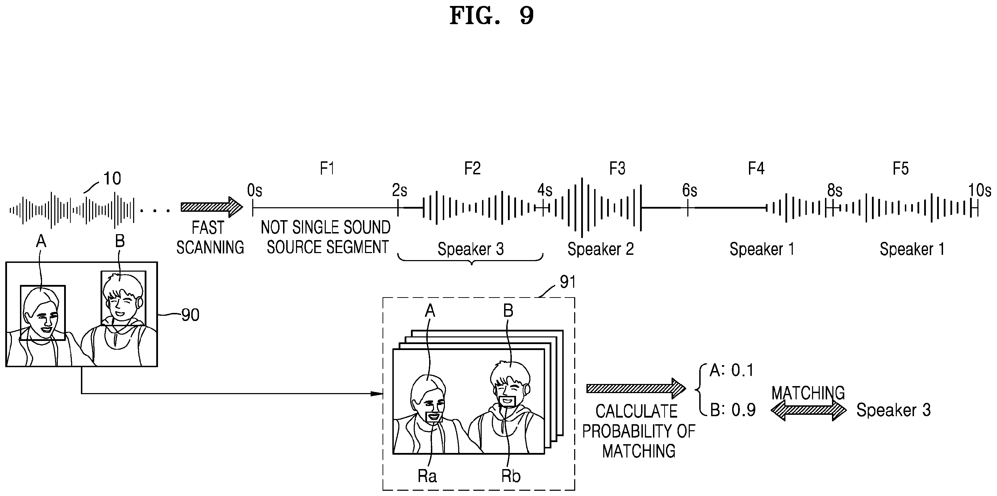

According to an embodiment of the disclosure, the electronic device may match a speech separated from the audio signal to a speaker appearing in the video based on a single sound source segment detected as a result of performing fast scanning. In detail, the electronic device according to an embodiment of the disclosure may match a person whose lip shape is detected to change in the single sound source segment to a speaker who generates the speech provided in the single sound source segment. Hereinafter, with reference to FIGS. 8 and 9, a method for an electronic device according to an embodiment of the disclosure to match the separated speech to a speaker in a video will be described in detail.

### (1) Audio-visual matching

FIG. 8 illustrates modules provided in an electronic device for performing a sound source separation process according to an embodiment of the disclosure. FIG. 9 illustrates a process of matching a person in a video to a separated sound source by an electronic device according to an embodiment of the disclosure.

Referring to FIG. 8, the electronic device according to an embodiment of the disclosure may include the fast scanning module 100, the sound source separation module 200, and an audio-visual matching module 800. The detailed configurations and operations of the fast scanning module 100 and the sound source separation module 200 are as described above with reference to FIGS. 1 to 7.

The audio-visual matching module 800 may match a speech provided in a video to a speaker appearing in the video based on an audio signal and a video signal provided in the video. In detail, when there is a speaker whose lip movement is detected in a video segment corresponding to a single sound source segment, the audio-visual matching module 800 may determine the corresponding speaker as a speaker who generates the speech provided in the single sound source segment. Accordingly, an output 80 of the audio-visual matching module 800 may display the diarization result of a plurality of speeches along with pictures 81, 82, and 83 of a speaker matching each speech.

Hereinafter, a detailed operation of the audio-visual matching module 800 is described with reference to FIG. 9.

As illustrated in FIG. 9, a video input to the electronic device may include the audio signal 10 and a video signal 90. In FIG. 9, two people (speaker A and speaker B) appear in the video.

The fast scanning module 100 of the electronic device may detect single sound source segments by performing fast scanning on the audio signal 10. In FIG. 9, the electronic device performs fast scanning on five frames F1, F2, F3, F4, and F5, and as a result, detects the second frame F2 to the fifth frame F5 as a single sound source segment.

A speaker who generates a speech provided in the second frame F2 is referred to as a third speaker (i.e., the speaker 3), a speaker who generates a speech provided in the third frame F3 is referred to as a second speaker (i.e., the speaker 2), and a speaker who generates a speech provided in the fourth frame F4 and the fifth frame F5 is referred to as a first speaker (i.e., the speaker 1).

The audio-visual matching module 800 may analyze lip motions of people provided in a video segment corresponding to the single sound source segment and select a person (speaker) corresponding to a speech of the single sound source segment based on the analysis result.

Referring to FIG. 9, the audio-visual matching module 800 may analyze frames 91 provided in the same segment (2 to 4 seconds) as the second frame F2 from among frames provided in the video signal 90 to find a speaker matching a speech provided in the second frame F2.

According to an embodiment of the disclosure, the audio-visual matching module 800 may analyze lip motions of people (i.e., speaker A and speaker B) provided in the frames 91 of a video signal corresponding to the second frame F2. For example, the audio-visual matching module 800 may find areas Ra and Rb around the mouth of a person in each frame and compare the areas Ra and Rb around the mouth in the frames 91 to determine whether there is a change in lip shape of the people (speaker A and speaker B) during a segment corresponding to the second frame F2.

The audio-visual matching module 800 may determine the person with a change in lip shape as the speaker who generates a speech provided in the second frame F2. In FIG. 9, the audio-visual matching module 800 may calculate a probability of matching each of the people (i.e., speaker A and speaker B) provided in the video to a third speaker (i.e., speaker 3) corresponding to the second frame F2, and when the results are 0.1 for speaker A and 0.9 for speaker B, the audio-visual matching module 800 may determine that speaker B corresponds to the third speaker (i.e., speaker 3) who generates a speech of the second frame F2.

### (2) Examples of displaying sound source separation result on video playback screen

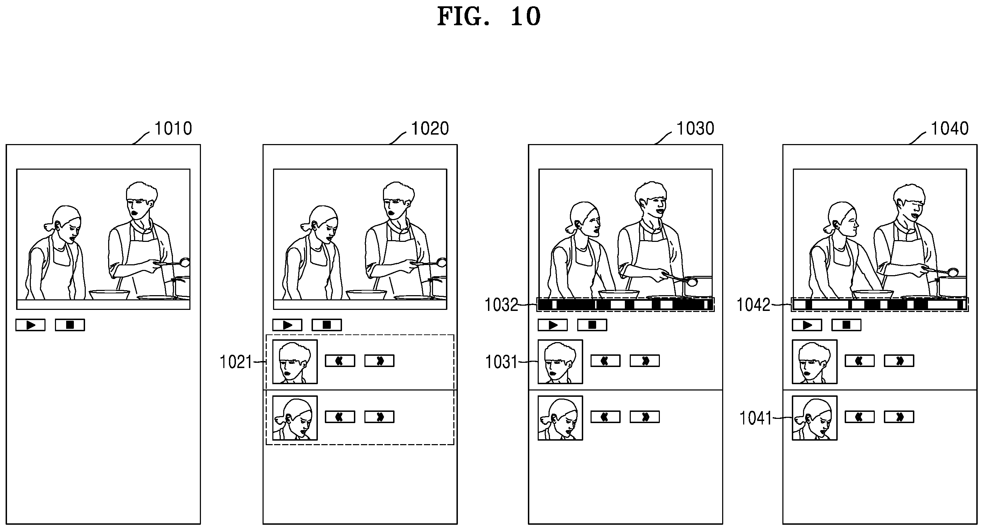

FIG. 10 illustrates user interface (UI) screens indicating sound source separation results displayed on a screen of an electronic device according to an embodiment of the disclosure.

Referring to FIG. 10, a first screen 1010 displays an area for displaying a video and a button for playing or stopping the video.

The electronic device may separate sound sources from an audio signal provided in a video upon receiving a request for sound source separation from a user, or automatically. The sound source separation result is displayed in a first area 1021 of a second screen 1020. The first area 1021 displays a picture for identifying a speaker corresponding to the separated sound source (speech) and buttons (back button and previous button) for skipping a speech of each speaker or returning to a previous speech.

The electronic device according to an embodiment of the disclosure may perform diarization for each separated speaker and display the result on a screen, thereby allowing a user to easily identify a segment in which each speaker speaks.

A third screen 1030 displays a first timeline 1032 indicating a segment in which a first speaker 1031 speaks. When the user selects a picture of the first speaker 1031, the first timeline 1032 may be displayed on the screen in this way.

The user may recognize the segment in which the first speaker 1031 speaks, through the first timeline 1032. The user may easily move between segments in which the first speaker 1031 speaks by selecting the back button or the previous button.

Similarly, a fourth screen 1040 displays a second timeline 1042 indicating a segment in which a second speaker 1041 speaks. When the user selects a picture of the second speaker 1041, the second timeline 1042 may be displayed on the screen in this way.

The user may recognize the segment in which the second speaker 1041 speaks, through the second timeline 1042. The user may easily move between segments in which the second speaker 1041 speaks by selecting the back button or the previous button.

### 5. Overall configurations and operations of the electronic device

Hereinafter, the electronic device for performing the operations described thus far will be described. The electronic device according to an embodiment of the disclosure may have a photographing function and a computational processing function, such as a smartphone or a digital camera. In some embodiments, the electronic device may be any of various types of devices (e.g., a laptop or a cloud server) that are capable of receiving video or audio files and performing a sound source separation process even when the electronic device does not have a photographing function. A configuration of another electronic device according to an embodiment of the disclosure is described in detail below with reference to FIG. 11.

FIG. 11 illustrates components provided in an electronic device according to an embodiment of the disclosure. Referring to FIG. 11, the electronic device 1100 according to an embodiment of the disclosure may include an input and output interface 1110, the processor 1120, and the memory 1130.

The input and output interface 1110 may include an input interface (e.g., a touch screen, a keyboard, or a microphone) for receiving a command or information from a user, and an output interface (e.g., a display panel or a speaker) for displaying an execution result of an operation according to a command of a user or a state of the electronic device 1100. According to an embodiment of the disclosure, the electronic device 1100 may receive an input (e.g., a sound source separation request) from a user through the input and output interface 1110, and when an operation is completed, may output a result of performing the operation (e.g., a sound source separation result) through the input and output interface 1110.

The processor 1120 may be a component that controls a series of processes to operate the electronic device 1100 according to the embodiments of the disclosure described herein and may include one or more processors. The one or more processors provided in the processor 1120 may be a circuit device (circuitry) such as a system on chip (SoC) or an integrated circuit (IC). The one or more processors provided in the processor 1120 may be a general-purpose processor such as a central processing unit (CPU), a microprocessor unit (MPU), an application processor (AP), or a digital signal processor (DSP), a graphics-dedicated processor such as a graphic processing unit (GPU), or a vision processing unit (VPU), an artificial intelligence (AI)-dedicated processor such as a neural processing unit (NPU), or a communication-dedicated processor such as a communication processor (CP). When the one or more processors provided in the processor 1120 are each an AI-dedicated processor, the corresponding AI-dedicated processor may be designed with a hardware structure specialized for processing a certain AI model.

The processor 1120 may record data to the memory 1130 or read the data stored in the memory 1130, and in particular, execute a program or at least one instruction stored in the memory 1130 to process data according to a predefined operation rule or an AI model. Accordingly, the processor 1120 may perform the operations described in embodiments of the disclosure, and operations described as being performed by the electronic device 1100 or modules provided in the electronic device 1100 in the disclosure may be considered as being performed by the processor 1120 unless otherwise specifically described.

The memory 1130 may be a component for storing various programs or data and may include a storage medium such as read-only memory (ROM), random access memory (RAM), a hard disk, compact disc read only memory (CD-ROM), and digital video disc (DVD), or a combination of storage media. The memory 1130 may not exist separately and may be provided in the processor 1120. The memory 1130 may include volatile memory, non-volatile memory, or a combination of volatile memory and non-volatile memory. A program or at least one instruction for performing operations according to embodiments of the disclosure described below may be stored in the memory 1130. The memory 1130 may also provide stored data to the processor 1120 according to a request of the processor 1120.

The embodiments of the disclosure described above with reference to FIGS. 1 to 10 may be performed by the electronic device 1100.

### 6. Descriptions of processes with reference to flowcharts

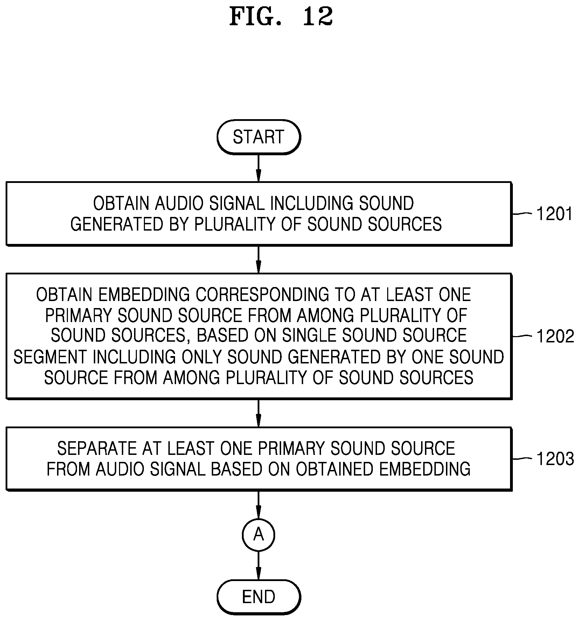

Hereinafter, with reference to flowcharts of FIGS. 12 to 18, a method of separating a sound source from an audio signal by an electronic device according to embodiments of the disclosure will be described. The operations provided in the flowcharts of FIGS. 12 to 18 may be performed by the electronic device 1100 of FIG. 11, and thus, the contents described above with reference to FIGS. 1 to 11 may be equally applied to FIGS. 12 to 18 even when omitted below.

Referring to FIG. 12, in operations 801 to 1201, the electronic device may obtain an audio signal including sounds generated by a plurality of sound sources.

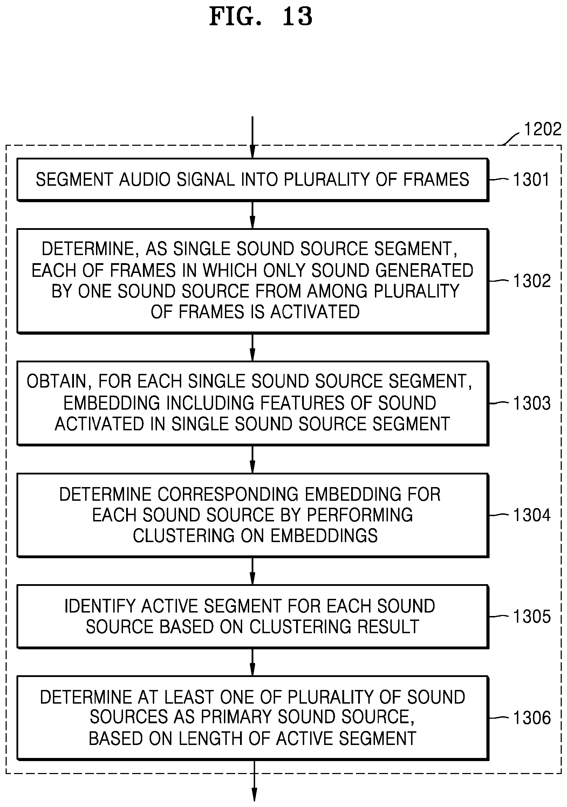

In operation 1202, the electronic device may obtain an embedding corresponding to at least one primary sound source from among the plurality of sound sources, based on the single sound source segment including only sound generated by one sound source from among the plurality of sound sources. Detailed operations provided in operation 1202 are illustrated in FIG. 13.

Referring to FIG. 13, in operation 1301, the electronic device may segment the audio signal into a plurality of frames.

In operation 1302, the electronic device may determine, as a single sound source segment, each of frames in which only the sound generated by one sound source from among the plurality of frames is activated.

In operation 1303, the electronic device may obtain, for each single sound source segment, an embedding including the features of the sound activated in the single sound source segment.

In operation 1304, the electronic device may determine a corresponding embedding for each sound source by performing clustering on embeddings. For example, the electronic device may classify similar embeddings into the same cluster and assign sound sources for each cluster.

In operation 1305, the electronic device may identify an active segment for each sound source based on the clustering result.

In operation 1306, the electronic device may determine at least one of the plurality of sound sources as a primary sound source, based on the length of the active segment. For example, the electronic device may determine, as primary sound sources, a certain number of sound sources in order of increasing length of the active segment.

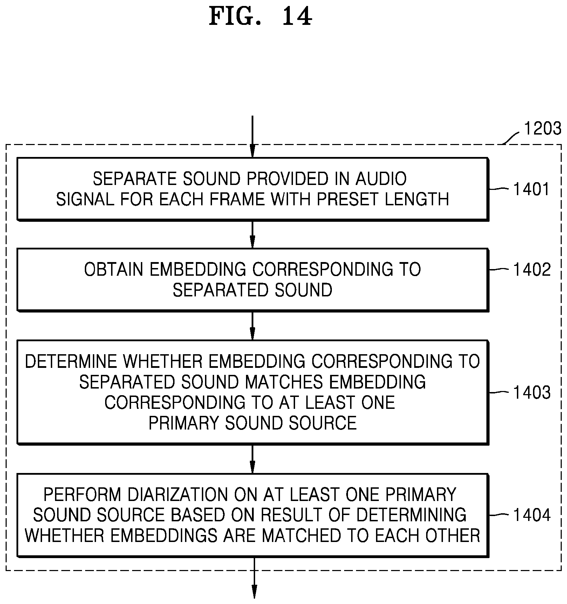

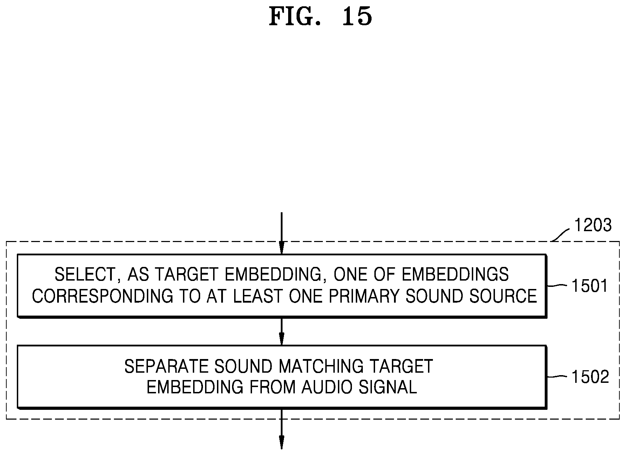

Referring back to FIG. 12, in operation 1203, the electronic device may separate at least one primary sound source from the audio signal based on the obtained embedding. Detailed operations provided in operation 1203 are illustrated in FIGS. 14 and 15.

Referring to FIG. 14, in operation 1401, the electronic device may separate sound provided in an audio signal for each frame with a preset length.

In operation 1402, the electronic device may obtain an embedding corresponding to the separated sound.

In operation 1403, the electronic device may determine whether the embedding corresponding to the separated sound matches an embedding corresponding to at least one primary sound source. For example, the electronic device may determine that embeddings with a similarity greater than or equal to a certain reference are matched to each other.

In operation 1404, the electronic device may perform diarization on at least one primary sound source based on the result of determining whether the embeddings are matched to each other. In this case, diarization may be or correspond to an operation indicating an active segment of sound generated by a primary sound source based on a time axis.

Referring to FIG. 15, in operation 1501, the electronic device may select, as a target embedding, one of the embeddings corresponding to at least one primary sound source. For example, the electronic device may select the target embedding based on the length of the active segment or a user may select one of the primary sound sources as the target embedding.

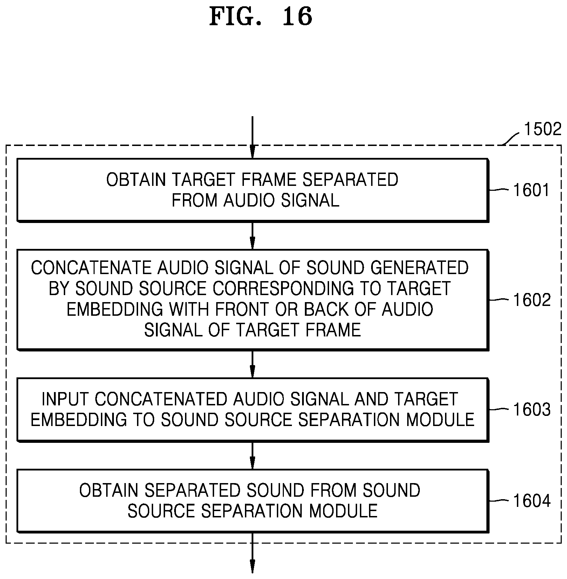

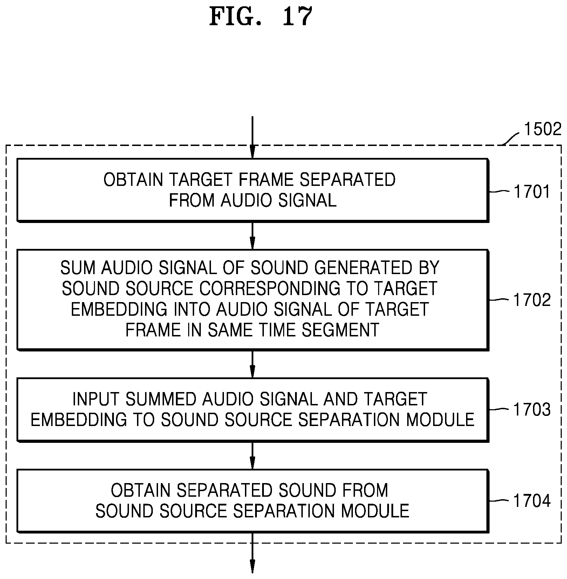

In operation 1502, the electronic device may separate sound matching the target embedding from the audio signal. Detailed operations provided in operation 1502 are illustrated in FIGS. 16 and 17.

Referring to FIG. 16, in operation 1601, the electronic device may obtain a target frame separated from the audio signal.

In operation 1602, the electronic device may concatenate an audio signal of sound generated by a sound source corresponding to the target embedding with a front or back of the audio signal of the target frame. In this case, the concatenated audio signal may be an audio signal of sound used when the target embedding is generated.

In operation 1603, the electronic device may input the concatenated audio signal and target embedding to a sound source separation module.

In operation 1604, the electronic device may obtain a separated sound from the sound source separation module.

Referring to FIG. 17, in operation 1701, the electronic device may obtain a target frame separated from the audio signal.

In operation 1702, the electronic device may sum an audio signal of sound generated by a sound source corresponding to the target embedding into an audio signal of a target frame in the same time segment. In this case, the concatenated audio signal may be an audio signal of sound used when the target embedding is generated.

In operation 1703, the electronic device may input the summed audio signal and target embedding to a sound source separation module.

In operation 1704, the electronic device may obtain a separated sound from the sound source separation module.

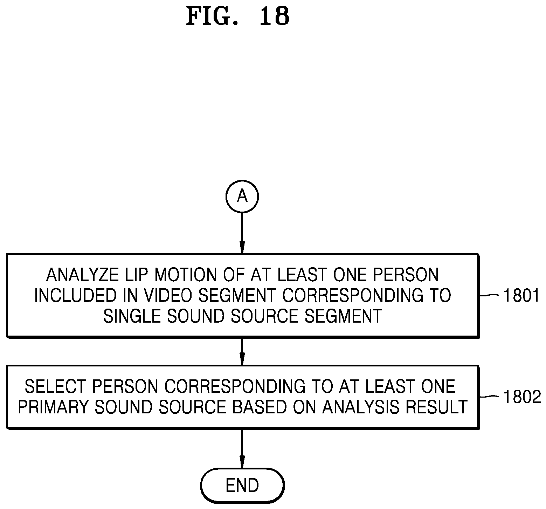

According to an embodiment of the disclosure, the electronic device may separate a primary sound source from an audio signal and then match the separated sound source to a person appearing in a video. FIG. 18 illustrates operations for matching a separated sound source to a person appearing in a video. Operations of FIG. 18 may be performed subsequent to operation 1203 of FIG. 12.

Referring to FIG. 18, in operation 1801, the electronic device may analyze a lip motion of at least one person included in a video segment corresponding to a single sound source segment.

In operation 1802, the electronic device may select a person corresponding to at least one primary sound source based on the analysis result. For example, the electronic device may determine that a person whose lip shape is detected to change is a speaker who generates a speech included in a single sound source segment.

According to the embodiments of the disclosure described above, the electronic device may quickly determine a primary sound source by performing fast scanning on an audio signal, extract the features of the primary sound source, and separate the primary sound source from the audio signal based on the extracted features of the primary sound source. Therefore, it may be expected that user convenience is improved as there is no need to separately input information about the sound source to be separated.

According to an embodiment of the disclosure, a method of separating a sound source from an audio signal may include obtaining an audio signal including sound generated by a plurality of sound sources, based on a single sound source segment including only sound generated by one sound source from among the plurality of sound sources, obtaining an embedding corresponding to at least one primary sound source from among the plurality of sound sources, and separating the at least one primary sound source from the audio signal based on the obtained embedding.

According to an embodiment of the disclosure, the obtaining of the embedding corresponding to the at least one primary sound source may include segmenting the audio signal into a plurality of frames, determining, as the single sound source segment, each of frames in which only the sound generated by the one sound source from among the plurality of frames is activated, for each single sound source segment, obtaining an embedding including features of the sound activated in the single sound source segment, and determining an embedding corresponding to each sound source by performing clustering on the embeddings.

According to an embodiment of the disclosure, the obtaining of the embedding corresponding to the at least one primary sound source may further include, based on a result of the clustering, identifying an active segment for each sound source, and based on a length of the active segment, determining, as a primary sound source, at least one sound source from among the plurality of sound sources.

According to an embodiment of the disclosure, the separating of the at least one primary sound source may include, for each frame with a preset length, separating sound provided in the audio signal, obtaining an embedding corresponding to the separated sound, determining whether the embedding corresponding to the separated sound matches an embedding corresponding to the at least one primary sound source, and based on a result of the determining whether the embeddings match each other, performing diarization on the at least one primary sound source.

According to an embodiment of the disclosure, the diarization may include an operation indicating an active segment of sound generated by the at least one primary sound source based on a time axis.

According to an embodiment of the disclosure, the separating of the at least one primary sound source may include selecting, as a target embedding, one of the embeddings corresponding to the at least one of the primary sound source, and separating sound matching the target embedding from the audio signal.

According to an embodiment of the disclosure, the separating of the sound matching the target embedding may include obtaining a segmented target frame from the audio signal, concatenating an audio signal of sound generated by a sound source corresponding to the target embedding to a front or back of an audio signal of the target frame, inputting the concatenated audio signal and the target embedding to a sound source separation module, and obtaining a separated sound from the sound source separation module.

According to an embodiment of the disclosure, the separating of the sound matching the target embedding may include obtaining a segmented target frame from the audio signal, summing an audio signal of sound generated by a sound source corresponding to the target embedding into an audio signal of the target frame in a same time segment, inputting the summed audio signal and the target embedding to a sound source separation module, and obtaining a separated sound from the sound source separation module.

According to an embodiment of the disclosure, the at least one primary sound source may include a speaker, and the method may further include analyzing a lip motion of at least one person included in a video segment corresponding to the single sound source segment, and based on a result of the analyzing, selecting a person corresponding to the at least one primary sound source.

According to an embodiment of the disclosure, the selecting of the person may include determining, as a speech who generates a speech provided in the single sound source segment, a person whose lip shape is detected to change.

According to an embodiment of the disclosure, an electronic device may include memory storing a program or at least one instruction, and at least one processor operatively coupled to the memory, wherein the at least one processor executes the program or at least one instruction stored in the memory to cause the electronic device to obtain an audio signal including sound generated by a plurality of sound sources, based on a single sound source segment including only sound generated by one sound source from among the plurality of sound sources, obtain an embedding corresponding to at least one primary sound source from among the plurality of sound sources, and then separate the at least one primary sound source from the audio signal based on the obtained embedding.

According to an embodiment of the disclosure, when obtaining an embedding corresponding to the at least one primary sound source, the electronic device may segment the audio signal into a plurality of frames, determine, as the single sound source segment, each of frames in which only the sound generated by the one sound source from among the plurality of frames is activated, for each single sound source segment, obtain an embedding including features of the sound activated in the single sound source segment, and then determine an embedding corresponding to each sound source by performing clustering on the embeddings.

According to an embodiment of the disclosure, when obtaining an embedding corresponding to the at least one primary sound source, the electronic device, based on a result of the clustering, the electronic device may identify an active segment for each sound source, and then, based on a length of the active segment, determine, as a primary sound source, at least one sound source from among the plurality of sound sources.

According to an embodiment of the disclosure, when separating the at least one primary sound source, for each frame with a preset length, the electronic device may separate sound provided in the audio signal, obtain an embedding corresponding to the separated sound, determine whether the embedding corresponding to the separated sound matches an embedding corresponding to the at least one primary sound source, and then, based on a result of the determining whether the embeddings match each other, perform diarization on the at least one primary sound source.

According to an embodiment of the disclosure, the diarization may include an operation indicating an active segment of sound generated by the at least one primary sound source based on a time axis.

According to an embodiment of the disclosure, when separating the at least one primary sound source, the electronic device may select, as a target embedding, one of the embeddings corresponding to the at least one primary sound source, and then separate sound matching the target embedding from the audio signal.

According to an embodiment of the disclosure, when separating the sound matching the target embedding, the electronic device may obtain a segmented target frame from the audio signal, concatenate an audio signal of sound generated by a sound source corresponding to the target embedding to a front or back of an audio signal of the target frame, input the concatenated audio signal and the target embedding to a sound source separation module, and then obtain a separated sound from the sound source separation module.

According to an embodiment of the disclosure, when separating the sound matching the target embedding, the electronic device may obtain a segmented target frame from the audio signal, sum an audio signal of sound generated by a sound source corresponding to the target embedding into an audio signal of the target frame in a same time segment, input the summed audio signal and the target embedding to a sound source separation module, and then obtain a separated sound from the sound source separation module.

According to an embodiment of the disclosure, the at least one primary sound source may include a speaker, and the electronic device may analyze a lip motion of at least one person included in a video segment corresponding to the single sound source segment, and then, based on a result of the analyzing, select a person corresponding to the at least one primary sound source.

One or more embodiments of the disclosure may be implemented or supported by one or more computer programs, and computer programs may be formed from computer-readable program code and may be recorded in a computer-readable medium. In the disclosure, the "application" and "program" are one or more computer programs, software components, instruction sets, procedures, functions, objects, classes, instances, related data, or parts thereof, which are suitable for implementation in computer readable program code. The "computer-readable program code" may include various types of computer codes including source code, purpose code, and executable code. The "computer-readable medium" may include various types of media to be accessed by a computer, such as read only memory (ROM), random access memory (RAM), hard disk drive (HDD), compact disc (CD), digital video disc (DVD), or various types of memories.

A device-readable storage medium may be provided in the form of a non-transitory storage medium. Here, the "non-transitory storage medium" is a tangible device and may exclude wired, wireless, optical, or other communication links that transmit temporary electrical or other signals. The "non-transitory storage medium" may not distinguish between semi-permanent and temporary storage of data in the storage medium. For example, "non-transitory storage medium" may include a buffer in which data is temporarily stored. A computer-readable medium may be any available medium to be accessed by a computer, and may include volatile and non-volatile media, and separate and non-separated media. The computer-readable medium includes a medium in which data is permanently stored and a medium in which data is stored and overwritten later, such as a rewritable optical disk or an erasable memory device.

According to an embodiment of the disclosure, the method according to the various embodiments disclosed herein may be included in a computer program product and provided. The computer program product may be traded between a seller and a buyer as a product. The computer program product may be distributed in the form of a storage medium (e.g. compact disk read only memory (CD-ROM)) that is to be read on a device, or may be distributed (e.g., downloaded or uploaded) directly or online through an application store or between two user devices (e.g., smartphones). In the case of online distribution, at least some of the computer program products (e.g., downloadable application) may be at least temporarily stored in a device-readable storage medium such as a server of a manufacturer, a server of an application server, or memory of a relay server, or may be temporarily generated.

The above description of the disclosure is for an example, and one of ordinary skill in the art understands that various changes in form and details may be easily made without changing the technical ideas or required characteristics of the disclosure. For example, the technologies may be performed in a different order from the described methods, and/or the system, structure, device, and circuit described above may be coupled or combined in a different form from the methods described above, or may be replaced or substituted by elements or equivalent objects, thereby achieving appropriate results. Therefore, the above-described embodiments of the disclosure need to be understood as exemplary and not limited in any way. For example, each component described in a single type may be distributed and performed, and similarly, components that are described as distributed may also be performed in a combined form.

The scope of the disclosure is defined by the claims described below rather than the detailed description, and needs to be interpreted as contained in the range of the disclosure or modified form derived from the meaning and range of the claims and an equivalent concept thereof.

## Claims

1. A method of separating a sound source from an audio signal, the method comprising:
obtaining the audio signal including sound generated by a plurality of sound sources;
based on a single sound source segment including only a sound generated by one sound source from among the plurality of sound sources, obtaining an embedding corresponding to at least one primary sound source from among the plurality of sound sources; and
separating the at least one primary sound source from the audio signal, based on the obtained embedding.

2. The method of claim 1, wherein the obtaining the embedding corresponding to the at least one primary sound source, comprises:
segmenting the audio signal into a plurality of frames;
determining, as the single sound source segment, each of frames in which only the sound generated by the one sound source is activated among the plurality of frames;
for each single sound source segment, obtaining an embedding including features of the sound activated in the single sound source segment; and
determining an embedding corresponding to each sound source by performing clustering on the embeddings.

3. The method of any one of claims 1 and 2, wherein the obtaining the embedding corresponding to the at least one primary sound source, further comprises:
based on a result of the clustering, identifying an active segment for each sound source; and
based on a length of the active segment, determining, as the at least one primary sound source, at least one sound source from among the plurality of sound sources.

4. The method of any one of claims 1 to 3, wherein the separating the at least one primary sound source, comprises:
for each frame with a preset length, separating sound in the audio signal;
obtaining an embedding corresponding to the separated sound;
determining whether the embedding corresponding to the separated sound matches another embedding corresponding to the at least one primary sound source; and
based on a result of the determining whether the embedding matches the another embedding, performing diarization on the at least one primary sound source.

5. The method of any one of claims 1 to 4, wherein the diarization comprises an operation indicating an active segment of sound generated by the at least one primary sound source based on a time axis.

6. The method of any one of claims 1 to 5, wherein the separating the at least one primary sound source, comprises:
selecting, as a target embedding, one of embeddings corresponding to the at least one primary sound source; and
separating, from the audio signal, sound matching the target embedding.

7. The method of any one of claims 1 to 6, wherein the separating, from the audio signal, the sound matching the target embedding, comprises:
obtaining a segmented target frame from the audio signal;
concatenating an audio signal of sound generated by a sound source corresponding to the target embedding to a front or back of an audio signal of the segmented target frame;
inputting, to a sound source separation module, the concatenated audio signal and the target embedding; and
obtaining a separated sound from the sound source separation module.

8. The method of any one of claims 1 to 7, wherein the separating, from the audio signal, the sound matching the target embedding, comprises:
obtaining a segmented target frame from the audio signal;
summing an audio signal of sound generated by a sound source corresponding to the target embedding into an audio signal of the segmented target frame in a same time segment;
inputting, to a sound source separation module, the summed audio signal and the target embedding; and
obtaining a separated sound from the sound source separation module.

9. The method of any one of claims 1 to 8, wherein the at least one primary sound source comprises a speaker, and
wherein the method further comprises:
analyzing a lip motion of at least one person in a video segment corresponding to the single sound source segment; and
based on a result of the analyzing, selecting a person corresponding to the at least one primary sound source.

10. An electronic device (1100) comprising:
memory (1130) storing a program or at least one instruction; and
at least one processor (1120) operatively coupled to the memory (1130),
wherein the at least one processor (1120) is configured to execute the program or the at least one instruction stored in the memory (1130) to cause the electronic device to:
obtain an audio signal including sound generated by a plurality of sound sources, based on a single sound source segment including only a sound generated by one sound source from among the plurality of sound sources,
obtain an embedding corresponding to at least one primary sound source from among the plurality of sound sources, and
separate the at least one primary sound source from the audio signal, based on the obtained embedding.

11. The electronic device (1100) of claim 10, wherein, when obtaining an embedding, corresponding to the at least one primary sound source, the at least one processor (1120) is further configured to execute the program or the at least one instruction stored in the memory (1130) to cause the electronic device (1100) to:
segment the audio signal into a plurality of frames,
determine, as the single sound source segment, each of frames in which only the sound generated by the one sound source from among the plurality of frames is activated,
for each single sound source segment, obtain an embedding including features of the sound activated in the single sound source segment, and
determine an embedding corresponding to each sound source by performing clustering on the embeddings.

12. The electronic device (1100) of any one of claims 10 or 11, wherein, when obtaining an embedding, corresponding to the at least one primary sound source, based on a result of the clustering, the at least one processor (1120) is further configured to execute the program or the at least one instruction stored in the memory (1130) to cause the electronic device (1100) to:
identify an active segment for each sound source, and
based on a length of the active segment, determines, as a primary sound source, at least one sound source from among the plurality of sound sources.

13. The electronic device (1100) of any one of claims 10 to 12, wherein, when separating the at least one primary sound source, for each frame with a preset length, the at least one processor (1120) is further configured to execute the program or the at least one instruction stored in the memory (1130) to cause the electronic device (1100) to:
separate a sound provided in the audio signal,
obtain an embedding corresponding to the separated sound,
determine whether the embedding corresponding to the separated sound matches another embedding corresponding to the at least one primary sound source, and
based on a result of the determining whether the embedding matches the another embedding, perform diarization on the at least one primary sound source.

14. The electronic device (1100) of any one of claims 10 to 13, wherein, when separating the at least one primary sound source, the at least one processor (1120) is further configured to execute the program or the at least one instruction stored in the memory (1130) to cause the electronic device (1100) to:
select, as a target embedding, one of embeddings corresponding to the at least one primary sound source, and
separate a sound matching the target embedding from the audio signal.

15. The electronic device (1100) of any one of claims 10 to 14, wherein the at least one primary sound source comprises a speaker, and
wherein the at least one processor (1120) is further configured to execute the program or the at least one instruction stored in the memory (1130) to cause the electronic device (1100) to:
analyze a lip motion of at least one person in a video segment corresponding to the single sound source segment, and
based on a result of the analyzing, select a person corresponding to the at least one primary sound source.
